# EUROPEAN PATENT SPECIFICATION

(11) **EP 4 644 908 B1**
(45) Date of publication and mention of the grant of the patent: **22.07.2026**
(21) Application number: 24173498.7
(22) Date of filing: 30.04.2024
(51) Int. Cl.: G01N 35/00, G01N 35/04

(54) **PROCESSING APPARATUS, KIT, AND METHOD FOR PROCESSING AT LEAST ONE MICROFLUIDIC DEVICE**
VERARBEITUNGSVORRICHTUNG, KIT UND VERFAHREN ZUR VERARBEITUNG VON MINDESTENS EINER MIKROFLUIDISCHEN VORRICHTUNG
APPAREIL DE TRAITEMENT, KIT ET PROCÉDÉ DE TRAITEMENT D'AU MOINS UN DISPOSITIF MICROFLUIDIQUE

(43) Date of publication of application: 05.11.2025
(73) Proprietor: QIAGEN GmbH, 40724 Hilden (DE)
(72) Inventor: ENDRES, Christopher, 40597 Düsseldorf (DE)
(74) Representative: Vossius & Partner Patentanwälte Rechtsanwälte mbB

(56) References cited:
- WO-A1-2022/270984
- US-B2- 11 154 864

## Description

Molecular biology analyses are performed for a number of different purposes and/or in a number of different fields. In particular, polymerase chain reaction (PCR) is a known and widespread tool for applications in molecular biology. PCR may be used to amplify the amount of a specific gene present in a sample, e.g., a DNA sample and/or an RNA sample, that may contain a number of different genes. PCR can be used for a variety of experiments and/or analyses, including, e.g., genetic testing, forensic analyses, etc.

Variants of PCR may be used to quantitatively determine how much of a particular gene of interest is present within a sample of extracted DNA and/or RNA. This may be useful, for example, in determining whether the sample is heterozygous or homozygous for a specific gene of interest.

Digital PCR (dPCR), which is a known type of PCR, involves dividing a sample into a number, e.g., in particular a relatively large number, of separate aliquots. Some of the aliquots may contain a particular sequence, e.g., a DNA sequence and/or an RNA sequence, corresponding to a gene of interest and some of the aliquots may not contain the sequence of interest.

The aliquots may then be amplified to determine whether a molecule, e.g., a DNA molecule and/or an RNA molecule, containing the gene of interest is present within each aliquot. Based on the number of aliquots that have undergone exponential growth, the original concentration of DNA and/or RNA prior to dilution may be determined.

Conventional systems for molecular biology analyses, in particular conventional systems that employ PCR, in particular dPCR, are generally relatively complex, in particular with respect to the design/construction of the system and/or with respect to the analysis procedure and/or the procedure of preparing the liquid sample for the analysis.

For instance, the systems known from the prior art often require a relatively extensive set-up procedure and/or preparation procedure to set-up and/or prepare, respectively, the liquid sample and/or the device carrying the liquid sample for the analysis/analyses. In particular, setting up and/or preparing the liquid sample and/or the device carrying the liquid sample for the analysis/analyses with the known systems often requires a relatively large workspace, which may lead to a relatively large footprint of the system.

Furthermore, the systems known from the prior art are relatively inefficient, e.g., by having a relatively low degree of automation and/or by relying on manual labor by one or more lab workers to a relatively large extent and/or by having a relatively low throughput. WO 2022/270984 A1 is related prior art.

It is therefore an object of the present disclosure to provide an apparatus for processing a liquid sample and/or a device which receives and/or is configured to receive a liquid sample which improves one or more aspects of the known devices/systems, in particular by at least partially alleviating one or more of the above-mentioned drawbacks.

The above-identified object is achieved by a processing apparatus defined by the features of claim 1. Preferred embodiments are defined by the features of the dependent claims, respectively. In the following description, although numerous features may be designated as optional, it is nevertheless acknowledged that all features comprised in the independent claims are not to be read as optional

The processing apparatus may be configured for processing at least one device, preferably at least one microfluidic device, which may include at least one input well which may be configured to receive at least one liquid sample. The liquid sample may include one or more solid components, e.g., one or more particles.

The processing apparatus may include at least one first station configured for filling the at least one liquid sample into the at least one input well of the at least one (microfluidic) device. Alternatively, or additionally, the at least one first station may be configured for at least partially sealing the at least one input well from an environment and/or from one or more further input wells defined within the at least one microfluidic device, once the at least one input well is at least partially filled with the at least one liquid sample. The at least one input well may be at least partially open to the environment, prior to sealing the at least one input well, to allow the liquid sample to be filled into the at least one input well.

The processing apparatus may include at least one second station configured for performing at least one analysis of the at least one liquid sample, preferably after the microfluidic device and/or the liquid sample has/have been processed at the first station, e.g., by performing one or more steps at the first station, e.g., filling the at least one liquid sample into the at least one input well of the at least one (microfluidic) device and/or at least partially sealing the at least one input well, as described above.

The processing apparatus may include at least one transfer device which is configured for transferring the at least one microfluidic device between the at least one first station and the at least one second station. The at least one transfer device may be configured to transfer the at least one microfluidic device from the at least one first station to the at least one second station. Alternatively, or additionally, the at least one transfer device may be configured to transfer the at least one microfluidic device from the at least one second station to the at least one first station. The at least one transfer device be configured to transfer a plurality of the at least one microfluidic device between the at least one first station and the at least one second station sequentially and/or simultaneously.

The at least one transfer device preferably at least partially physically, i.e., structurally, connects, at least temporarily, the at least one first station and the at least one second station, i.e., by at least temporarily structurally/mechanically coupling the at least one first station and the at least one second station.

The at least one transfer device may be powered by one or more non-human power sources, e.g., electrically, pneumatically, by one or more springs, etc.

The apparatus described herein may combine, in a single apparatus with multiple stations, a plurality of steps of processing the microfluidic device and/or the liquid sample, e.g., handling the microfluidic device and/or the liquid sample and/or analyzing the liquid sample, whereas these steps are performed at entirely different workstations arranged in separate locations within a lab environment and largely independently from each other in the prior art systems. For instance, a set-up of the device carrying the liquid sample, e.g., the filling of the device with the liquid sample and/or the sealing of the device, for at least some or most systems known from the prior art is performed on or at a standard lab bench or hood and requires a separate and additional lab bench space, in addition to the analysis device/system. The user generally must manually move the device, e.g., the nanoplate, carrying the liquid from the setup workstation to the analysis device/system which performs the analysis/analyses. This may limit the efficiency of the systems known from the prior art, e.g., by requiring a relatively large workspace/area and/or by limiting the throughput and/or a degree of automation of the respective systems. By contrast, the apparatus described herein increases the efficiency, automation, and/or throughput by combining at least the above-recited steps in a single apparatus via two (work) stations which are interconnected or interconnectable by the at least one transfer device.

The apparatus may include more than two stations, e.g., at least three stations. The at least three stations may be interconnected or interconnectable by the at least one transfer device, optionally by a plurality of the at least one transfer device.

The first station may be configured such that filling the at least one liquid sample into the at least one input well of the at least one (microfluidic) device is performed manually and/or at least partially automatically, e.g., by means of at least one automated filling device/robot, also known as a liquid handler or liquid handling robot, at the first station. Alternatively, or additionally, the first station may be configured such that sealing of the (microfluidic) device is performed manually and/or at least partially automatically, e.g., by means of at least one automated sealing device/robot, at the first station. Alternatively, or additionally, the first station may be configured such that mixing one or more components of the at least one liquid sample is performed manually and/or at least partially automatically, e.g., by means of at least one mixing device, at the first station, in particular prior to filling the at least one liquid sample into the at least one input well. The mixing device may be the above-mentioned liquid handler or liquid handling robot or a dedicated mixing device. The first station may be configured as a manual workspace and/or as a workspace which performs one or more steps, e.g., filling and/or sealing and/or mixing, automatically, e.g., via one or more robots and/or one or more motorized devices. At least one of filling, sealing, and mixing may be performed manually and one or more of the other of filling, sealing, and mixing may be performed at least partially automatically at the first station. Filling, sealing, and/or mixing may be performed at least partially automatically at the first station.

The (microfluidic) device may be configured as a nanoplate. The microfluidic device may be configured to comply with ANSI/SLAS microplate standards. The microfluidic device may include one or more features, e.g., with respect to the microfluidic structure and/or the microfluidic channels, of the microfluidic device described in US 11,154,864 B2 and/or EP 2 969 215 B1.

The (microfluidic) device may include at least one main body in which the input well(s) is/are defined. The sealing of the (microfluidic) device may be achieved by fixedly attaching at least one sealing element, e.g., at least one sealing mat, to at least one side of the main body of the microfluidic device, preferably a top side of the main body, to cover the input well(s) such that the input well(s) is/are protected and/or sealed, preferably fluidically sealed, from an environment by the at least one sealing element. The sealing element may be fixedly, preferably removably, attached to the main body. At least one adhesive may be arranged at least partially along at least one interface between the at least one sealing element and the main body. Alternatively, or additionally, a frictional fit and/or form fit may be provided between the sealing element and the main body, e.g., via one or more pin and hole connections, to fix the sealing element and the main body together, preferably in a releasable manner. Alternatively, or additionally, the sealing of the (microfluidic) device may be achieved by providing at least one oil, in particular at least one oil overlay, to at least one side of the main body of the microfluidic device, preferably a top side of the main body, to cover the input well(s) such that the input well(s) is/are protected and/or sealed.

The at least one sealing element may be rolled onto the at least one side of the main body, e.g., via at least one roller, which be operated manually and/or automatically. Alternatively, the at least one sealing element may be pressed onto the at least one side of the main body.

The terms "releasable", "releasably", "remove", "removable", and all equivalents related to "releasing" and removing", within the context of the present disclosure, mean to be able to disconnect the concerned part(s) or component(s) without compromising the structural integrity of the concerned part(s) or component(s) and of the part(s) or component(s) from which the concerned part(s) or component(s) is/are disconnected.

The first station may include at least one ventilation device and/or at least one fume hood and/or at least one PCR hood and/or at least one clean bench configured to at least partially extract one or more media, e.g., fumes, from an environment of the first station and/or introduce one or more media, e.g., clean air, into the environment of the first station. The at least one fume hood and/or at least one PCR hood and/or at least one clean bench may include at least one filter, in particular at least one high-efficiency particulate absorbing (HEPA) filter, through which the extracted one or more media may be passed. The at least one fume hood and/or at least one PCR hood and/or at least one clean bench may be configured to extract the one or more media from the environment of the first station, pass the one or more media through at least one filter, and reintroduce the filtered one or more media into the environment of the first station.

The first station may include at least one first housing which at least partially defines and/or at least partially surrounds a workspace of the first station therein, and optionally at least one access device, e.g., at least one opening, for accessing the workspace, e.g., by a user.

The second station may include at least one cabinet or second housing which houses one of more components for performing and/or aiding the analysis/analyses of the at least one liquid sample.

The at least one input well may be fluidically connected or connectable to one or more channels, preferably one or more microfluidic channels, such that the liquid sample may at least partially flow from the at least one input well into the to one or more channels, preferably selectively, e.g., via one or more triggering mechanisms.

The term "microchannel" or "microfluidic channel", within the context of the present disclosure, is defined as a channel which have a hydraulic diameter smaller than 1 mm, e.g., between usually 1 micron and 99 microns, at and/or along at least a section of the respective channel.

Preferably, the one or more microfluidic channels each include one or more microchambers. The one or more microchambers may be arranged in series along the respective microfluidic channel.

Each microchamber may include at least one reaction chamber, which is configured to receive at least a portion of the liquid sample and house at least one reaction, preferably at least one polymerase chain reaction (PCR), of the liquid sample. Each microchamber may include at least one vent chamber configured to vent at least one gas from the reaction chamber, preferably as the liquid sample flows into and/or through the reaction chamber.

Hence, the (microfluidic) device may be configured to separate the liquid sample into a plurality of partitions, i.e., the microchambers/reaction chambers, preferably in a fluidically isolated manner, i.e., such that portions of the liquid sample in the microchambers/reaction chambers are isolated/isolatable, at least temporarily, from each other. This may allow reaction(s) of the liquid sample in the respective reaction chamber to take place substantially independently from the liquid sample in the other, e.g., adjacent, reaction chambers.

Each reaction chamber may be configured to define any suitable volume and/or receive any suitable volume of the liquid sample. For example, the volume of one or more of the reaction chambers may be less than about 10 microliters, preferably less than about 1 microliter, preferably less than about 500 nanoliters, preferably less than about 200 nanoliters (e.g., about 150 nanoliters), preferably less than about 100 nanoliters, preferably less than about 50 nanoliters, preferably less than about 20 nanoliters, preferably less than about 10 nanoliters, preferably less than 5 nanoliters, preferably less than about 1 nanoliter, or any other appropriate volume.

The (microfluid) device may be configured to house one or more reagents, e.g., a DNA primer configured to complement a DNA sample, in particular at specific gene locations. For instance, the one or more reagents and the liquid sample may be introduced into the (microfluid) device, in particular into the input well(s), as a mixture solution, e.g., containing DNA polymerase and one or more reagents, e.g., nucleotides, that facilitate the activities of the polymerase. Alternatively, or additionally, the (microfluid) device may be configured to house, at least temporarily, the one or more reagents separately, preferably in a fluidically sealed manner, from the liquid sample.

The (microfluid) device may include at least one reagent cavity which is configured to receive at least one reagent. The at least one reagent cavity may be fluidically separated or separable from the at least one input well by at least one barrier.

Preferably, the at least one barrier is configured to be manipulatable, preferably by heat and/or pressure, in a state in which the liquid sample is received in the at least one input well and the at least one reagent is received in the at least one reagent cavity, to allow mixing of the liquid sample and the at least one reagent.

The at least one input well may include at least one inlet cavity. The at least one first station and/or the at least one second station may include at least activation device, which may also be referred to herein as activation mechanism or triggering mechanism or triggering device, configured to trigger, preferably by means of pressure, the at least one liquid sample which is received in the at least one inlet cavity to flow from the least one inlet cavity to the one or more microfluidic channels, when the liquid sample is received in the input well(s). This may be referred to as "priming". Hence, the activation device may be referred to as a "priming module" accordingly.

The activation device may be configured to operate and/or be actuated automatically, i.e., without user intervention.

The second station may be configured to perform one or more of the following: filling the one or more microfluidic channels and/or microchambers, referred to as "priming" or "filing partitions", closing or sealing the one or more microchambers from each other, referred to as "closing partitions", thermocycling, imaging and removing the (microfluidic) device from the second station.

Preferably, the at least one analysis includes at least one of: molecular screening, polymerase chain reaction, digital polymerase chain reaction, cell sorting, single cell analysis, and any molecular biological analysis procedure for analyzing the liquid sample.

Preferably, the at least one transfer device is configured to automatically transfer the at least one microfluidic device from the at least one first station to the at least one second station, once the at least one liquid sample is at least partially filled in the at least one input well and/or the at least one input well is at least partially sealed, preferably without any user intervention.

This may increase a degree of automation of the apparatus, e.g., to increase the efficiency of the apparatus, e.g., by increasing the throughput and/or reducing manual work and/or reducing operating costs. For instance, the apparatus may be configured to detect, or at least receive a detection signal, when the one or more steps at the first station have been completed to automatically transfer the at least one microfluidic device from the at least one first station to the at least one second station thereafter.

Preferably, the at least one first station includes at least one powered handling device configured to automatically fill the at least one liquid sample into the at least one input well and/or at least partially seal the at least one input well. Optionally, the at least one powered handling device, or a second powered handling device, e.g., a dedicated mixing device, may be configured to mix one or more components of the at least one liquid sample. The at least one first station may include a single powered handling device for automatically filling the at least one liquid sample into the at least one input well and/or automatically at least partially sealing the at least one input well. The at least one first station may include a first powered handling device for automatically filling the at least one liquid sample and/or at least one further powered handling device for automatically at least partially sealing the at least one input well. The first powered handling device may be configured as a liquid handler or liquid handling robot. The further powered handling device may be configured as a roller or rolling device and/or as a stamp or stamping device. The further powered handling device may be configured as a sealing device configured to perform a stamping process and/or rolling process to at least partially seal the at least one input well.

Preferably, the at least one second station includes at least one thermo-module, preferably a plurality of thermo-modules, configured to heat and/or cool the liquid sample, preferably to heat and cool the liquid sample in a cyclical and/or alternating manner. This may allow different temperature-dependent reactions to be triggered and/or enabled, e.g., by repeatedly heating and cooling the microfluidic device, more specifically the liquid sample. The thermo-module may also be referred to as a "thermocycler". The at least one second station may include a plurality of thermo-modules which, e.g., may increase throughput, in particular since thermo-cycling is often one of the most, if not the most, time-consuming procedures for analyzing a liquid sample, in particular based on PCR. The plurality of thermo-modules may be configured to operate at least partially simultaneously.

Preferably, the at least one second station includes at least one detection device configured to detect one or more properties of one or more reactions occurring in the liquid sample. The at least one detection device may be configured as an imaging device. The at least one detection device may be configured to detect one or more filled partitions, i.e., reaction volumes, and one or more positive partitions, i.e., reaction volumes which contain the target, of the (microfluid) device and/or count the number of pre-determined, or positive, reactions of the liquid sample.

Preferably, the at least one second station includes at least one storage device configured to store the at least one microfluidic device, preferably a plurality of microfluidic devices, in a state in which the liquid sample is at least partially filled in the respective input well and the respective input well is at least partially sealed. This may allow a plurality of the microfluidic devices, in particular a relatively large number of microfluidic devices, e.g., 8 or more, to be stored and processed at least partially sequentially and/or simultaneously, e.g., for overnight runs. The at least one storage device may be configured as a load tower. For instance, one or more of the microfluidic devices stored in the storage device may be removed from the storage device and delivered, preferably automatically via one or more handling devices, to one of more components or modules in the second station for analyzing the liquid sample, e.g., a thermocycler and/or partitioning device.

The at least one storage device may be arranged at an interface between the first station and the second station, in particular to receive the microfluidic device(s) from the first station. Preferably, the transfer device is configured to transfer the microfluidic device(s) from the first station to the storage device. One or more handling devices, e.g., one or more robots, may be configured to maneuver the microfluidic device(s) within the second station. The one or more handling devices may be configured to retrieve one or more of the microfluidic device(s) from the at least one storage device and move the one or more microfluidic devices to a location in which the analysis/analyses is/are performed.

Preferably, the at least one storage device extends vertically to receive a plurality of microfluidic devices in a vertically stacked manner, when the processing apparatus is in an operational state. This may make the apparatus relatively compact and may save space, e.g., by reducing the footprint of the apparatus.

Preferably, the at least one storage device is configured to receive the at least one microfluidic device, preferably a plurality of the at least one microfluidic device, from the at least one transfer device.

Preferably, the at least one second station includes at least one ejecting device configured to eject one or more items from the at least one second station, preferably one or more of the at least one microfluidic device. This may facilitate removal of the one or more items, preferably the one or more of the at least one microfluidic device, preferably by automatically removing the one or more items, e.g., after one or more analyses have been completed.

The second station may include at least one cabinet or housing which houses one of more of the above-identified components, e.g., the at least one ejecting device, the at least one storage device, etc., for performing and/or aiding in the analysis of the at least one liquid sample.

Preferably, the at least one transfer device is configured as an elevator configured to reciprocate between the at least one first station and the at least one second station. This may provide a relatively accurate and compact transferring means. Moreover, this may allow, or facilitate, the first station and the second station to be arranged in a stacked manner, which may reduce the space, i.e., the footprint, occupied by the first station and second station.

Preferably, the at least one transfer device includes at least one tray configured to at least partially receive the at least one microfluidic device. The tray may be configured to move between a first position, in which the at least one microfluidic device is receivable in the at least one first station, and at least a second position in the at least one second station to allow the at least one microfluidic device to be deposited in the at least one second station. The at least one tray may be configured to sequentially and/or simultaneously deliver a plurality of microfluidic devices from the at least one first station to the at least one second station. Once the tray has delivered the microfluidic device(s) to the second station in the second position, the tray may return to the first position, e.g., to receive the next microfluidic device(s) to be delivered to the second station. Preferably, the tray is configured to move between the first position and the second position in a reciprocating manner.

The microfluidic devices may be prepared at the first station and the samples may be analyzed at the second station.

Preferably, the at least one microfluidic device includes a plurality of the at least one input well. The at least one first station may be configured for filling, sequentially and/or at least partially simultaneously, each of the plurality of input wells, preferably automatically, i.e., without user invention.

Preferably, the at least one first station is configured for at least partially sealing, preferably automatically, the plurality of input wells from an environment and/or from one or more further input wells defined within the at least one microfluidic device, once the plurality of input wells is at least partially filled with the at least one liquid sample.

Preferably, the at least one first station and the at least one second station are arranged vertically in a stacked manner. In other words, the at least one first station and the at least one second station may be configured as a tower. This may reduce the floorspace, i.e., the footprint, consumed by the apparatus.

Preferably, the at least one first station is arranged on top of the at least one second station.

Preferably, the processing apparatus further includes at least one user interface configured to display information to the user and/or receive one or more inputs from the user. For this purpose, the processing apparatus may include at least one display, preferably a touchscreen display. The at least one user interface may allow and/or require one or more users to enter authorization data to login, e.g., to begin processing the apparatus and/or to enter one or more setting data, e.g., processing data.

Preferably, the processing apparatus has a total footprint area of no more than 5000 cm2, preferably no more than 4500 cm2, more preferably no more than 4000 cm2, more preferably no more than 3800 cm2, more preferably no more than 3600 cm2. The total footprint area is defined as the total area on a floor, which the processing apparatus is preferably configured to rest on and/or which is occupied by the processing apparatus. At least one fume hood and/or at least one PCR hood and/or at least one clean bench may be provided which may be larger than the above-recited area, e.g., 160 cm X 60 cm. The area of the fume hood and/or PCR hood and/or clean bench may not be included in the above-recited area(s), since it is generally arranged at a higher level which may not occupy or take away floor space and/or working space, e.g., from other devices besides the processing apparatus.

Preferably, the at least one second station includes a cabinet which houses one of more components for performing and/or aiding the at least one analysis of the at least one liquid sample.

Preferably, the at least one first station is arranged on a top surface of the cabinet.

Preferably, the at least one second station is configured for performing at least one analysis of the at least one liquid sample of a plurality of the at least one microfluidic device simultaneously and/or sequentially, preferably automatically or at least semi-automatically.

The object mentioned at the beginning is also solved by a kit which may include at least one processing apparatus according to any of the embodiments described herein and at least one microfluidic device having any of the configurations described herein. The features, configurations, and advantages described above with respect to the (microfluidic) device apply to the kit accordingly.

The object mentioned at the beginning is also solved by the features of claim 15 which defines a method for processing at least one microfluidic device by at least one processing apparatus, preferably the processing apparatus according to any of the embodiments described herein. The features, configurations, and advantages described above with respect to the (microfluidic) device apply to the method accordingly.

The method may includes at least partially filling at least one liquid sample into at least one input well defined in the at least one microfluidic device and/or at least partially sealing the at least one input well from an environment and/or from one or more further input wells defined within the at least one microfluidic device, once the at least one input well is filled with the at least one liquid sample, at a first station of the processing apparatus.

The method may includes transferring, by at least one transfer device of the processing apparatus, the at least one microfluidic device from the at least one first station to a second station of the processing apparatus. The at least one transfer device may at least partially connect the at least one first station and the at least one second station.

The method may includes performing at least one analysis of the at least one liquid sample at the second station of the processing apparatus; and

Preferably, the at least one analysis includes one or more of the following: molecular screening, polymerase chain reaction, digital polymerase chain reaction, cell sorting, single cell analysis, and any molecular biological analysis procedure for analyzing the liquid sample.

Embodiments of the present disclosure are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present disclosure. The drawings are not intended to limit the scope of the disclosure, which is defined by the appended claims and is to include the equivalents thereof.
- Fig. 1: shows, in a schematic view, a processing apparatus according to an embodiment of the present disclosure;
- Fig. 2: shows, in a schematic cross-sectional view, a microfluidic device for use with a processing apparatus according to any embodiment of the present disclosure;
- Fig. 3: shows, in a schematic and enlarged view, one or more microfluidic channels of the microfluidic device of Fig. 2;
- Fig. 4: shows, in a schematic view, a processing apparatus according to an embodiment of the present disclosure;
- Fig. 5: shows, in a schematic view, further details of the second station of the processing apparatus of Fig. 4;
- Fig. 6: shows, in a schematic view, a processing apparatus according to an embodiment of the present disclosure;
- Fig. 7: shows, in a schematic view, a processing apparatus according to an embodiment of the present disclosure.

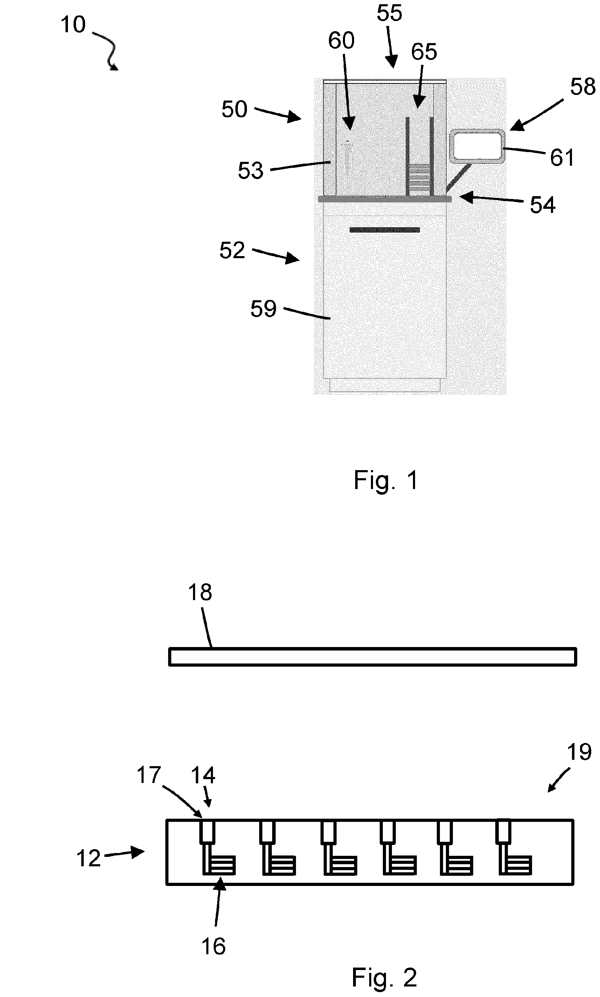

Fig. 1 shows, in a schematic view, a processing apparatus 10 for processing at least one device, preferably at least one microfluidic device. The microfluidic device may be configured as a nanoplate. Exemplary microfluidic devices which can be used with the processing apparatus 10 are described, e.g., in US 11,154,864 B2 and/or EP 2 969 215 B1.

An exemplary microfluidic device 12 for use with the processing apparatus 10 is shown in Fig. 2. In the following, the device 12 is referred to as a microfluidic device, although the processing apparatus 10 is not limited to use with a microfluidic device. Any device which is capable of receiving the liquid sample may be used.

As shown in Fig. 2, the microfluidic device 12 may include at least one input well 14, preferably a plurality of input wells 14, configured to receive the at least one liquid sample. The microfluidic device 12 may include one or more channels 16, preferably one or more microfluidic channels 16, which are fluidically connected or connectable to the at least one input well 14. Each input well may include at least one inlet cavity 17.

At least one sealing element 18 for sealing the input well(s) 14 may be provided. The least one sealing element 18 may be applicable, e.g., fixedly attachable, to a top side 19 of the microfluidic device 12.

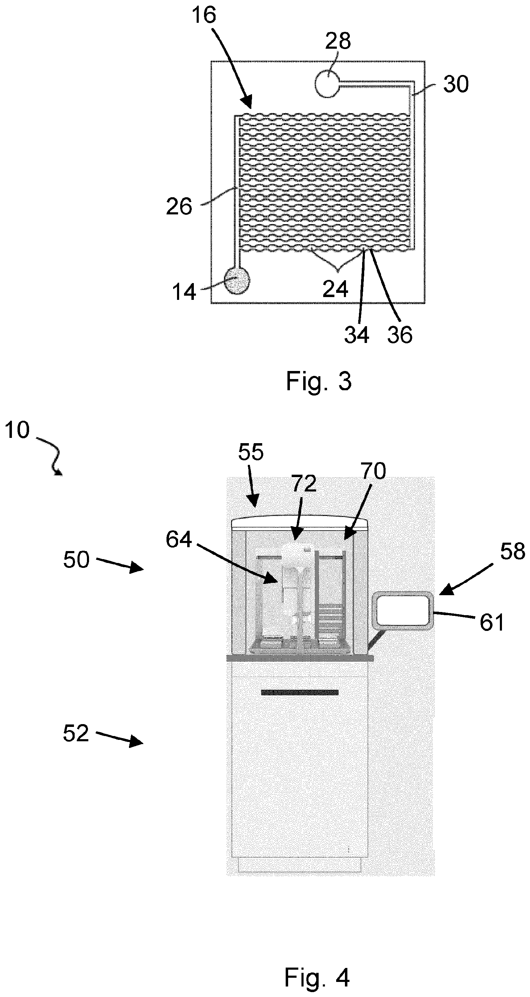

As shown in Fig. 3, at least some of the microfluidic channels 16, preferably each microfluidic channel 16, may include a plurality of microchambers 24. Preferably, the microchambers 24 are arranged in series along the respective microfluidic channel 16. The microchambers 24 may be fluidically connected or connectable, preferably selectively, to the respective input well 14 via at least one inlet channel 26. The microchambers 24 may be fluidically connected or connectable to a vent or output well 28 via at least one outlet channel 30. The microchambers 24 may be arranged in groups or sub-circuits which are fluidly coupled together. The microchambers 24 may be arranged in multiple groups and the microchambers 24 in each group may be fluidly coupled together in series in a respective microfluidic channel 16 or segments of the respective microfluidic channel 16. Each group of microchambers 24 may be arranged to receive liquid flow in parallel with each other.

At least some of the microchambers 24, preferably each microchamber 24, may include at least one reaction chamber 34 configured to receive at least a portion of the liquid sample and house at least one reaction, preferably at least one polymerase chain reaction (PCR), of the liquid sample.

At least some of the microchambers 24, preferably each microchamber 24, may include at least one vent chamber 36 configured to vent at least one gas from the reaction chamber 34 as the liquid sample flows into and/or through the reaction chamber 34. The at least one vent chamber 36 may be configured as a downstream section of the respective microfluidic channel(s) 16 and/or as a separate, but fluidically connected/connectable, chamber.

The reaction chamber 34 may be configured to receive and hold a predefined volume of the sample from an upstream section of the respective microfluidic channel(s) 16 and the vent chamber 36 may be configured to vent gas from the reaction chamber 34 as the liquid sample flows into the reaction chamber 34. When the gas has been vented from at least the reaction chamber 34 and/or the reaction chamber 34 receives a predefined volume of fluid, the liquid sample may flow through the vent chamber 36 and continue along the microfluidic channel(s) 16 to the next microchamber 24. In this manner, the reaction chamber 34 may receive liquid from an upstream segment of the microfluidic channel(s) 16 and the liquid may pass through the vent chamber 36 to a downstream segment of the microfluidic channel(s) 16. Moreover, air residing in the microfluidic channel(s) 16 may be vented from the microfluidic channel(s) 16 by the advancing flow of the liquid sample along the microfluidic channel(s) 16.

Coming back to Fig. 1, the processing apparatus 10 may include at least one first station 50 which may be configured for filling the at least one liquid sample into the at least one input well 14 of the at least one microfluidic device 12. Alternatively, or additionally, the at least one first station 50 may be configured for at least partially sealing the at least one input well 14, e.g., by means of the sealing element 18 shown in Fig. 2, from an environment and/or from one or more further input wells 14 defined within the at least one microfluidic device 12, once the at least one input well 14 is at least partially filled with the at least one liquid sample.

The processing apparatus 10 may include at least one second station 52 configured for performing at least one analysis of the at least one liquid sample, in a state in which the at least one liquid sample is received in the microfluidic device 12.

The first station 50 may include at least one cover or housing 53 configured to at least partially encompass or define a workspace of the first station 50. At least one access means, e.g., an opening and/or a, may be provided to provide access to a workspace of the first station 50.

The first station 50 may include at least one ventilation device and/or at least one fume hood and/or at least one PCR hood and/or at least one clean bench 55, preferably arranged at and/or along a top of the first station 50.

The second station 52 may include at least one cover or housing 59 configured to at least partially encompass or define a workspace of the second station 52. At least one access means, e.g., an opening and/or a, may be provided to provide access to the workspace of the second station 52.

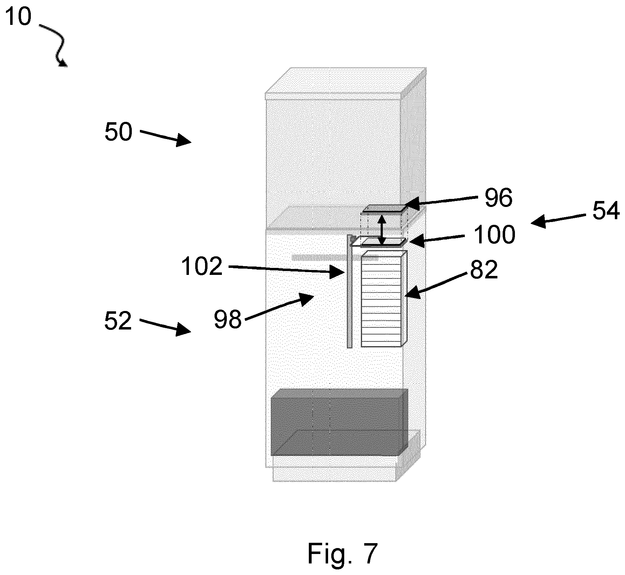

The processing apparatus 10 may include at least one transfer device 54 which may at least partially connect the at least one first station 50 and the at least one second station 52 and which may be configured for transferring the at least one microfluidic device 12 between the at least one first station 50 and the at least one second station 52. An exemplary configuration of the transfer device 54 is shown in Fig. 7 and described further below in more detail.

As shown in Fig. 1, the at least one first station 50 and the at least one second station 52 are preferably stacked vertically, preferably such that the at least one first station 50 is arranged above the at least one second station 52.

The processing apparatus may include at least one user interface 58 configured to display information to the user and/or receive one or more inputs from one or more users. For this purpose, the processing apparatus 10 may include at least one display 61, preferably a touchscreen display. The at least one user interface 58 may allow and/or require one or more users to enter authorization data to login, e.g., to begin processing the microfluidic device(s) 12 and/or to enter one or more setting data, e.g., processing data.

The first station 50 may be configured such that filling the at least one liquid sample into the at least one input well 14 of the at least one microfluidic device 12 can be performed manually.

For instance, Fig. 1 shows a manual filling device 60 which is manually operatable by a user. Alternatively, or additionally, the first station 50 may be configured for at least partially automatically filling the at least one liquid sample into the at least one input well 14, e.g., by means of at least one automated filling device/robot, also known as a liquid handler or liquid handling robot. An exemplary liquid handler 64 for automatically filling the at least one liquid sample into the at least one input well 14 is shown in Fig. 4.

The first station 50 may be configured such that sealing of the microfluidic device 12 is performed manually, e.g., via a manually operable roller or rolling device, and/or at least partially automatically, e.g., by means of at least one automated sealing device/robot. For instance, the first station 50 may include at least one sealing device 65 which may be operable manually and/or automatically. The transfer device 54 may be arranged underneath and/or adjacent to the sealing device 65 to provide a relatively short distance between the transfer device 54 and the sealing device 65, such that the microfluidic device(s) 12 may be handled by the transfer device 54 preferably immediately after the microfluidic device(s) 12 has/have been sealed.

An exemplary automated sealing device/robot 70 is shown in Fig. 4. In particular, the liquid handler 64 and the automated sealing device/robot 70 may be configured as a single module 72, as shown in Fig. 4. As shown in Fig. 4, the microfluidic device(s) may be moved, in an assembly line manner, automatically, e.g., via at least one conveyor, and/or manually, from the liquid handler 64 to the sealing device/robot 70.

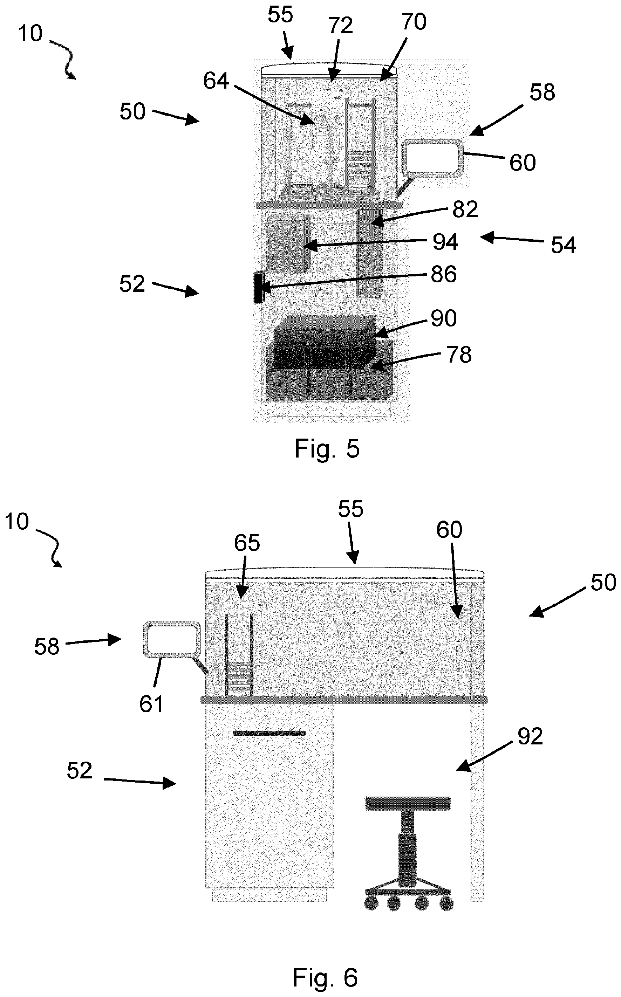

The second station 52 may include one or more components and/or modules for analyzing the liquid sample and optionally one or more components for handling and/or processing the microfluidic device(s) 12 and/or the liquid sample, which are described below with respect to Fig. 5. The respective component(s) and/or module(s) may be implemented from one or more available analyzing systems, in particular from one or more available PCR and/or dPCR analyzing systems. For instance, the respective component(s) and/or module(s) may be utilized and implemented from the QlAcuity digital PCR system which is manufactured by QIAGEN headquartered in Hilden, Germany.

Thus, the component(s) and/or module(s) may be transferred with no, or minimal, modification. This may reduce the cost of the processing apparatus 10. Alternatively, the component(s) and/or module(s) may be configured specifically for the processing apparatus 10.

As shown in Fig. 5, the second station 52 may include at least one thermo-module 78, preferably a plurality of thermo-modules 78, configured to heat and/or cool the liquid sample, preferably to heat and cool the liquid sample in a cyclical and/or alternating manner. Fig. 5 shows three thermo-modules 78. However, this is only an example. The processing apparatus 10 may have any number of thermo-modules 78, i.e., more or less than shown in Fig. 5.

The second station 52 may include at least one storage device 82 configured to store the at least one microfluidic device 12, preferably a plurality of microfluidic devices 12, in a state in which the liquid sample is at least partially filled in the respective input well 14, and optionally the respective input well 14 is at least partially sealed. The at least one storage device 82 may be configured to receive the at least one microfluidic device 12 from the at least one transfer device 54.

The second station 52 may include at least one ejecting device 86 configured to eject one or more items, preferably one or more of the at least one microfluidic device 12, from the at least one second station 52.

The second station 52 may include at least one detection device 90 configured to detect one or more properties of one or more reactions occurring in the liquid sample. The detection device 90 may be configured to optically detect, e.g., as an imaging device, the one or more properties of the one or more reactions occurring in the liquid sample.

The second station 52 may include at least activation device 94 configured to trigger, preferably by means of pressure, the at least one liquid sample which is received in the input well 14, more specifically the inlet cavity 17, to flow from the input well 14, more specifically the inlet cavity 17, to the one or more microfluidic channels 16. The at least activation device 94 may also be referred to as a "priming device" or "partitioning device".

Fig. 6 shows, in a schematic view, a further exemplary embodiment of the processing apparatus 10. The processing apparatus 10 shown in Fig. 6 is similar to the processing apparatus 10 shown in Fig. 1. In addition, the processing apparatus 10 of Fig. 6 includes at least one user region 92 for accommodating one or more users which are operating the processing apparatus 10. For instance, the at least one user region 92 may include one or more seating means, as shown in Fig. 6. A shown in Fig. 6, the first station 50 may be wider and/or have a large area, in particular with respect to a vertically projected area, than the second station 52. However, the first station 50 and the second station 52 may have substantially the same width and/or the same area.

Fig. 7 shows, in a schematic view, a configuration of the transfer device 54. The transfer device 54 may include at least one tray 96 configured to at least partially receive the at least one microfluidic device 12. The tray 96 is configured to move, preferably in a reciprocating manner, between a first position, in which the at least one microfluidic device 12 is receivable in and/or from the at least one first station 50, and at least a second position in and/or at the at least one second station 52 to allow the at least one microfluidic device 12 to be transferred to, preferably deposited in, the at least one second station 52. The movement of the tray 96 is indicated by a double-arrowed line in Fig. 7. The at least one tray 96 may be configured to sequentially and/or simultaneously deliver a plurality of microfluidic devices 12 from the at least one first station 50 to the at least one second station 52.

The second station 52 may include at least one handling device 98 configured to receive the microfluidic device(s) 12 from the transfer device 54 and deliver the microfluidic device(s) 12 to the storage device 82. The handling device 98 may include at least one support device 100 configured to support each microfluidic device 12. The support device 100 may be movable along at least one guide element 102, preferably vertically. The guide element 102 preferably extends at least partially along the storage device 82.

The embodiments described herein may be combined. However, the embodiments described herein may also be exercised/implemented individually.

## Claims

1. A processing apparatus (10) for processing at least one microfluidic device (12) which includes at least one input well (14) configured to receive at least one liquid sample, the processing apparatus (10) including:
at least one first station (50) configured for filling the at least one liquid sample into the at least one input well (14) of the at least one microfluidic device (12) and/or for at least partially sealing the at least one input well (14) from an environment and/or from one or more further input wells (14) defined within the at least one microfluidic device (12), once the at least one input well (14) is at least partially filled with the at least one liquid sample;
at least one second station (52) configured for performing at least one analysis of the at least one liquid sample; and
at least one transfer device (54) which at least partially connects the at least one first station (50) and the at least one second station (52) and which is configured for transferring the at least one microfluidic device (12) between the at least one first station (50) and the at least one second station (52),
**characterized in that** the at least one second station (52) includes at least one storage device (82) configured to store a plurality of microfluidic devices (12), in a state in which the liquid sample is at least partially filled in the respective input well (14) and the respective input well (14) is at least partially sealed.

2. The processing apparatus (10) of claim 1, wherein the at least one analysis includes at least one of: molecular screening, polymerase chain reaction, and digital polymerase chain reaction, cell sorting, and single cell analysis.

3. The processing apparatus (10) of any of the preceding claims, wherein the at least one transfer device (54) is configured to automatically transfer the at least one microfluidic device (12) from the at least one first station (50) to the at least one second station (52), once the at least one liquid sample is at least partially filled in the at least one input well (14) and/or the at least one input well (14) is at least partially sealed.

4. The processing apparatus (10) of any of the preceding claims, wherein the at least one first station (50) includes at least one powered handling device (64, 70, 72) configured to automatically fill the at least one liquid sample into the at least one input well /or at least partially seal the at least one input well (14).

5. The processing apparatus (10) of any of the preceding claims, wherein the microfluidic device (12) includes one or more microfluidic channels (16) and the at least one input well (14) includes at least one inlet cavity (17), wherein the at least one second station (52) includes at least activation device (94) configured to trigger, preferably by means of pressure, the at least one liquid sample which is received in the at least one inlet cavity (17) to flow from the least one inlet cavity (17) to the one or more microfluidic channels (16).

6. The processing apparatus (10) of any of the preceding claims, wherein the at least one second station (52) includes at least one thermo-module (78), preferably a plurality of thermo-modules (78), configured to heat and/or cool the liquid sample, preferably to heat and cool the liquid sample in a cyclical and/or alternating manner.

7. The processing apparatus (10) of any of the preceding claims, wherein the at least one storage device (82) is configured to receive the at least one microfluidic device (12) from the at least one transfer device (54).

8. The processing apparatus (10) of claim 7, wherein the at least one storage device (82) extends vertically to receive a plurality of microfluidic devices (12) in a vertically stacked manner, when the processing apparatus (10) is in an operational state.

9. The processing apparatus (10) of any of the preceding claims, wherein the at least one second station (52) includes at least one ejecting device (86) configured to eject one or more items from the at least one second station (52), preferably one or more of the at least one microfluidic device (12).

10. The processing apparatus (10) of any of the preceding claims, wherein the at least one transfer device (54) is configured as an elevator configured to reciprocate between the at least one first station (50) and the at least one second station (52).

11. The processing apparatus (10) of any of the preceding claims, wherein the at least one transfer device (54) includes at least one tray (96) configured to at least partially receive the at least one microfluidic device (12), wherein the tray (96) is configured to move between a first position, in which the at least one microfluidic device (12) is receivable in the at least one first station (50), and at least a second position in the at least one second station (52) to allow the at least one microfluidic device (12) to be deposited in the at least one second station (52), preferably wherein the at least one tray (96) is configured to sequentially and/or simultaneously deliver a plurality of microfluidic devices (12) from the at least one first station (50) to the at least one second station (52).

12. The processing apparatus (10) of any of the preceding claims, wherein the at least one first station (50) and the at least one second station (52) are arranged vertically in a stacked manner, preferably wherein the at least one first station (50) is arranged on top of the at least one second station (52).

13. The processing apparatus (10) according to any of the preceding claims, wherein the processing apparatus (10) has a total footprint area of no more than 5000 cm2, preferably no more than 4500 cm2, more preferably no more than 4000 cm2, more preferably no more than 3800 cm2, more preferably no more than 3600 cm2.

14. A kit including at least one processing apparatus (10) according to any of the preceding claims and at least one microfluidic device (12).

15. A method for processing at least one microfluidic device (12) by a processing apparatus (10), preferably a processing apparatus (10) according to any of claims 1 to 13, the method including:
at least partially filling at least one liquid sample into at least one input well (14) defined in the at least one microfluidic device (12) and/or at least partially sealing the at least one input well (14) from an environment and/or from one or more further input wells (14) defined within the at least one microfluidic device (12), once the at least one input well (14) is filled with the at least one liquid sample, at a first station (50) of the processing apparatus (10);
transferring, by at least one transfer device (54) of the processing apparatus (10), the at least one microfluidic device (12) from the at least one first station (50) to a second station (52) of the processing apparatus (10), wherein the at least one transfer device (54) at least partially connects the at least one first station (50) and the at least one second station (52); and
performing at least one analysis of the at least one liquid sample at the second station (52) of the processing apparatus (10),
wherein the at least one second station (52) includes at least one storage device (82) configured to store a plurality of microfluidic devices (12), in a state in which the liquid sample is at least partially filled in the respective input well (14) and the respective input well (14) is at least partially sealed.

## Patentansprüche

1. Verarbeitungseinrichtung (10) zum Verarbeiten mindestens einer mikrofluidischen Vorrichtung (12), die mindestens eine Eingabevertiefung (14) aufweist, die dazu eingerichtet ist, mindestens eine Flüssigkeitsprobe aufzunehmen, wobei die Verarbeitungseinrichtung (10) aufweist:
mindestens eine erste Station (50), die zum Füllen der mindestens einen Flüssigkeitsprobe in die mindestens eine Eingabevertiefung (14) der mindestens einen mikrofluidischen Vorrichtung (12) und/oder zum mindestens teilweisen Abdichten der mindestens einen Eingabevertiefung (14) von einer Umgebung und/oder von einer oder mehreren weiteren Eingabevertiefungen (14), die innerhalb der mindestens einen mikrofluidischen Vorrichtung (12) definiert sind, wenn die mindestens eine Eingabevertiefung (14) mindestens teilweise mit der mindestens einen Flüssigkeitsprobe gefüllt ist, eingerichtet ist;
mindestens eine zweite Station (52), die zum Durchführen mindestens einer Analyse der mindestens einen Flüssigkeitsprobe eingerichtet ist; und
mindestens eine Übergabevorrichtung (54), die die mindestens eine erste Station (50) und die mindestens eine zweite Station (52) mindestens teilweise verbindet und die zum Übertragen der mindestens einen mikrofluidischen Vorrichtung (12) zwischen der mindestens einen ersten Station (50) und der mindestens einen zweiten Station (52) eingerichtet ist,
**dadurch gekennzeichnet, dass** die mindestens eine zweite Station (52) mindestens eine Speichervorrichtung (82) aufweist, die dazu eingerichtet ist, mehrere mikrofluidische Vorrichtungen (12) zu speichern, in einem Zustand, in dem die Flüssigkeitsprobe mindestens teilweise in die jeweilige Eingabevertiefung (14) eingefüllt ist und die jeweilige Eingabevertiefung (14) mindestens teilweise abgedichtet ist.

2. Verarbeitungseinrichtung (10) nach Anspruch 1, wobei die mindestens eine Analyse mindestens eine der aufweist von: molekularem Screening, Polymerase-Kettenreaktion und digitaler Polymerase-Kettenreaktion, Zellsortierung und Einzelzellanalyse.

3. Verarbeitungseinrichtung (10) nach einem der vorstehenden Ansprüche, wobei die mindestens eine Übergabevorrichtung (54) dazu eingerichtet ist, die mindestens eine mikrofluidische Vorrichtung (12) automatisch von der mindestens einen ersten Station (50) zu der mindestens einen zweiten Station (52) zu übertragen, sobald die mindestens eine Flüssigkeitsprobe mindestens teilweise in die mindestens eine Eingabevertiefung (14) eingefüllt ist und/oder die mindestens eine Eingabevertiefung (14) mindestens teilweise abgedichtet ist.

4. Verarbeitungseinrichtung (10) nach einem der vorstehenden Ansprüche, wobei die mindestens eine erste Station (50) mindestens eine angetriebene Handhabungsvorrichtung (64, 70, 72) aufweist, die dazu eingerichtet ist, die mindestens eine Flüssigkeitsprobe automatisch in die mindestens eine Eingabevertiefung zu füllen und/oder die mindestens eine Eingabevertiefung (14) mindestens teilweise abzudichten.

5. Verarbeitungseinrichtung (10) nach einem der vorstehenden Ansprüche, wobei die mikrofluidische Vorrichtung (12) einen oder mehrere mikrofluidische Kanäle (16) aufweist und die mindestens eine Eingabevertiefung (14) mindestens eine Einlasshöhle (17) aufweist, wobei die mindestens eine zweite Station (52) mindestens eine Aktivierungsvorrichtung (94) aufweist, die dazu eingerichtet ist, vorzugsweise mittels Druck, die mindestens eine Flüssigkeitsprobe, die in der mindestens einen Einlasshöhle (17) aufgenommen ist, auszulösen, um von der mindestens einen Einlasshöhle (17) zu dem einen oder den mehreren mikrofluidischen Kanälen (16) zu fließen.

6. Verarbeitungseinrichtung (10) nach einem der vorstehenden Ansprüche, wobei die mindestens eine zweite Station (52) mindestens ein Thermomodul (78), vorzugsweise eine Mehrzahl von Thermomodulen (78), aufweist, das/die dazu eingerichtet ist, die Flüssigkeitsprobe zu erwärmen und/oder zu kühlen, vorzugsweise die Flüssigkeitsprobe in zyklischer und/oder alternierender Weise zu erwärmen und zu kühlen.

7. Verarbeitungseinrichtung (10) nach einem der vorstehenden Ansprüche, wobei die mindestens eine Speichervorrichtung (82) dazu eingerichtet ist, die mindestens eine mikrofluidische Vorrichtung (12) von der mindestens einen Übergabevorrichtung (54) zu empfangen.

8. Verarbeitungseinrichtung (10) nach Anspruch 7, wobei die mindestens eine Speichervorrichtung (82) sich vertikal erstreckt, um eine Mehrzahl von mikrofluidischen Vorrichtungen (12) auf eine vertikal gestapelte Weise aufzunehmen, wenn die Verarbeitungseinrichtung (10) in einem Betriebszustand ist.

9. Verarbeitungseinrichtung (10) nach einem der vorstehenden Ansprüche, wobei die mindestens eine zweite Station (52) mindestens eine Auswurfvorrichtung (86) aufweist, die dazu eingerichtet ist, einen oder mehrere Gegenstände aus der mindestens einen zweiten Station (52), vorzugsweise eine oder mehrere der mindestens einen mikrofluidischen Vorrichtung (12), auszugeben.

10. Verarbeitungseinrichtung (10) nach einem der vorstehenden Ansprüche, wobei die mindestens eine Übergabevorrichtung (54) als ein Aufzug eingerichtet ist, der dazu eingerichtet ist, zwischen der mindestens einen ersten Station (50) und der mindestens einen zweiten Station (52) hin- und herzufahren.

11. Verarbeitungseinrichtung (10) nach einem der vorstehenden Ansprüche, wobei die mindestens eine Übergabevorrichtung (54) mindestens ein Tablett (96) aufweist, das dazu eingerichtet ist, die mindestens eine mikrofluidische Vorrichtung (12) mindestens teilweise aufzunehmen, wobei das Tablett (96) dazu eingerichtet ist, sich zwischen einer ersten Position, in der die mindestens eine mikrofluidische Vorrichtung (12) in der mindestens einen ersten Station (50) aufnehmbar ist, und mindestens einer zweiten Position in der mindestens einen zweiten Station (52) zu bewegen, um zu ermöglichen, dass die mindestens eine mikrofluidische Vorrichtung (12) in der mindestens einen zweiten Station (52) abgelegt wird, vorzugsweise wobei das mindestens eine Tablett (96) dazu eingerichtet ist, eine Mehrzahl von mikrofluidischen Vorrichtungen (12) sequenziell und/oder gleichzeitig von der mindestens einen ersten Station (50) zu der mindestens einen zweiten Station (52) zu liefern.

12. Verarbeitungseinrichtung (10) nach einem der vorstehenden Ansprüche, wobei die mindestens eine erste Station (50) und die mindestens eine zweite Station (52) vertikal auf eine gestapelte Weise angeordnet sind, vorzugsweise wobei die mindestens eine erste Station (50) oberhalb der mindestens einen zweiten Station (52) angeordnet ist.

13. Verarbeitungseinrichtung (10) nach einem der vorstehenden Ansprüche, wobei die Verarbeitungseinrichtung (10) eine Gesamtstellfläche von nicht mehr als 5000 cm2, vorzugsweise nicht mehr als 4500 cm2, mehr bevorzugt nicht mehr als 4000 cm2, mehr bevorzugt nicht mehr als 3800 cm2, mehr bevorzugt nicht mehr als 3600 cm2 aufweist.

14. Kit, das mindestens eine Verarbeitungseinrichtung (10) nach einem der vorstehenden Ansprüche und mindestens eine mikrofluidische Vorrichtung (12) aufweist.

15. Verfahren zum Verarbeiten mindestens einer mikrofluidischen Vorrichtung (12) durch eine Verarbeitungseinrichtung (10), vorzugsweise eine Verarbeitungseinrichtung (10) nach einem der Ansprüche 1 bis 13, wobei das Verfahren aufweist:
mindestens teilweises Befüllen mindestens einer Flüssigkeitsprobe in mindestens eine Eingabevertiefung (14), die in der mindestens einen mikrofluidischen Vorrichtung (12) definiert ist, und/oder mindestens teilweises Abdichten der mindestens einen Eingabevertiefung (14) von einer Umgebung und/oder von einer oder mehreren weiteren Eingabevertiefungen (14), die innerhalb der mindestens einen mikrofluidischen Vorrichtung (12) definiert sind, sobald die mindestens eine Eingabevertiefung (14) mit der mindestens einen Flüssigkeitsprobe befüllt ist, an einer ersten Station (50) der Verarbeitungseinrichtung (10);
Übertragen, durch mindestens eine Übergabevorrichtung (54) der Verarbeitungseinrichtung (10), der mindestens einen mikrofluidischen Vorrichtung (12) von der mindestens einen ersten Station (50) zu einer zweiten Station (52) der Verarbeitungseinrichtung (10), wobei die mindestens eine Übergabevorrichtung (54) die mindestens eine erste Station (50) und die mindestens eine zweite Station (52) mindestens teilweise verbindet; und
Durchführen mindestens einer Analyse der mindestens einen Flüssigkeitsprobe an der zweiten Station (52) der Verarbeitungseinrichtung (10), wobei die mindestens eine zweite Station (52) mindestens eine Speichervorrichtung (82) aufweist, die dazu eingerichtet ist, mehrere mikrofluidische Vorrichtungen (12) zu speichern, in einem Zustand, in dem die Flüssigkeitsprobe mindestens teilweise in die jeweilige Eingabevertiefung (14) eingefüllt ist und die jeweilige Eingabevertiefung (14) mindestens teilweise abgedichtet ist.

## Revendications

1. Appareil de traitement (10) destiné au traitement d'au moins un dispositif microfluidique (12) qui comporte au moins un puits d'entrée (14) conçu pour recevoir au moins un échantillon liquide, l'appareil de traitement (10) comportant :
au moins une première station (50) conçue pour remplir l'au moins un échantillon liquide dans l'au moins un puits d'entrée (14) de l'au moins un dispositif microfluidique (12) et/ou pour sceller au moins partiellement l'au moins un puits d'entrée (14) par rapport à un environnement et/ou un ou plusieurs autres puits d'entrée (14) définis à l'intérieur de l'au moins un dispositif microfluidique (12), une fois que l'au moins un puits d'entrée (14) est au moins partiellement rempli de l'au moins un échantillon liquide ;
au moins une seconde station (52) configurée pour réaliser au moins une analyse de l'au moins un échantillon liquide ; et
au moins un dispositif de transfert (54) qui relie au moins partiellement l'au moins une première station (50) et l'au moins une seconde station (52) et qui est conçu pour transférer l'au moins un dispositif microfluidique (12) entre l'au moins une première station (50) et l'au moins une seconde station (52), **caractérisé en ce que** l'au moins une seconde station (52) comporte au moins un dispositif de stockage (82) conçu pour stocker une pluralité de dispositifs microfluidiques (12), dans un état dans lequel l'échantillon liquide est au moins partiellement rempli dans le puits d'entrée (14) respectif et le puits d'entrée (14) respectif est au moins partiellement scellé.

2. Appareil de traitement (10) selon la revendication 1, dans lequel l'au moins une analyse comporte au moins l'un parmi : un criblage moléculaire, une réaction en chaîne par polymérase et une réaction en chaîne par polymérase numérique, un tri de cellules et une analyse de cellule unique.

3. Appareil de traitement (10) selon l'une quelconque des revendications précédentes, dans lequel l'au moins un dispositif de transfert (54) est conçu pour transférer automatiquement l'au moins un dispositif microfluidique (12) de l'au moins une première station (50) à l'au moins une seconde station (52), une fois que l'au moins un échantillon liquide est au moins partiellement rempli dans l'au moins un puits d'entrée (14) et/ou l'au moins un puits d'entrée (14) est au moins partiellement scellé.

4. Appareil de traitement (10) selon l'une quelconque des revendications précédentes, dans lequel l'au moins une première station (50) comporte au moins un dispositif de manipulation motorisé (64, 70, 72) configuré pour remplir automatiquement l'au moins un échantillon liquide dans l'au moins un puits d'entrée et/ou sceller au moins partiellement l'au moins un puits d'entrée (14).

5. Appareil de traitement (10) selon l'une quelconque des revendications précédentes, dans lequel le dispositif microfluidique (12) comporte un ou plusieurs canaux microfluidiques (16) et l'au moins un puits d'entrée (14) comporte au moins une cavité d'entrée (17), dans lequel l'au moins une seconde station (52) comporte au moins un dispositif d'activation (94) conçu pour déclencher, de préférence au moyen d'une pression, l'au moins un échantillon liquide qui est reçu dans l'au moins une cavité d'entrée (17) pour s'écouler de l'au moins une cavité d'entrée (17) vers le ou les canaux microfluidiques (16).

6. Appareil de traitement (10) selon l'une quelconque des revendications précédentes, dans lequel l'au moins une seconde station (52) comporte au moins un thermo-module (78), de préférence une pluralité de thermo-modules (78), conçu pour chauffer et/ou refroidir l'échantillon liquide, de préférence pour chauffer et refroidir l'échantillon liquide de manière cyclique et/ou alternée.

7. Appareil de traitement (10) selon l'une quelconque des revendications précédentes, dans lequel l'au moins un dispositif de stockage (82) est conçu pour recevoir l'au moins un dispositif microfluidique (12) en provenance de l'au moins un dispositif de transfert (54).

8. Appareil de traitement (10) selon la revendication 7, dans lequel l'au moins un dispositif de stockage (82) s'étend verticalement pour recevoir une pluralité de dispositifs microfluidiques (12) de manière empilée verticalement, lorsque l'appareil de traitement (10) est dans un état opérationnel.

9. Appareil de traitement (10) selon l'une quelconque des revendications précédentes, dans lequel l'au moins une seconde station (52) comporte au moins un dispositif d'éjection (86) conçu pour éjecter un ou plusieurs éléments de l'au moins une seconde station (52), de préférence un ou plusieurs de l'au moins un dispositif microfluidique (12).

10. Appareil de traitement (10) selon l'une quelconque des revendications précédentes, dans lequel l'au moins un dispositif de transfert (54) est configuré comme un élévateur conçu pour effectuer un mouvement de va-et-vient entre l'au moins une première station (50) et l'au moins une seconde station (52).

11. Appareil de traitement (10) selon l'une quelconque des revendications précédentes, dans lequel l'au moins un dispositif de transfert (54) comporte au moins un plateau (96) conçu pour recevoir au moins partiellement l'au moins un dispositif microfluidique (12), dans lequel le plateau (96) est conçu pour se déplacer entre une première position, dans laquelle l'au moins un dispositif microfluidique (12) peut être reçu dans l'au moins une première station (50), et au moins une seconde position dans l'au moins une seconde station (52) pour permettre à l'au moins un dispositif microfluidique (12) d'être déposé dans l'au moins une seconde station (52), de préférence dans lequel l'au moins un plateau (96) est conçu pour distribuer séquentiellement et/ou simultanément une pluralité de dispositifs microfluidiques (12) de l'au moins un première station (50) à l'au moins une seconde station (52).

12. Appareil de traitement (10) selon l'une quelconque des revendications précédentes, dans lequel l'au moins une première station (50) et l'au moins une seconde station (52) sont disposées verticalement de manière empilée, de préférence dans lequel l'au moins une première station (50) est disposée au-dessus de l'au moins une seconde station (52).

13. Appareil de traitement (10) selon l'une quelconque des revendications précédentes, dans lequel l'appareil de traitement (10) a une surface d'encombrement totale ne dépassant pas 5000 cm2, de préférence ne dépassant pas 4500 cm2, plus préférablement ne dépassant pas 4000 cm2, plus préférablement ne dépassant pas 3800 cm2, plus préférablement ne dépassant pas 3600 cm2.

14. Kit comportant au moins un appareil de traitement (10) selon l'une quelconque des revendications précédentes et au moins un dispositif microfluidique (12).

15. Procédé pour traiter au moins un dispositif microfluidique (12) par un appareil de traitement (10), de préférence un appareil de traitement (10) selon l'une quelconque des revendications 1 à 13, le procédé comportant :
le remplissage au moins partiel d'au moins un échantillon liquide dans au moins un puits d'entrée (14) défini dans l'au moins un dispositif microfluidique (12) et/ou le scellement au moins partiel de l'au moins un puits d'entrée (14) par rapport à un environnement et/ou un ou plusieurs autres puits d'entrée (14) définis à l'intérieur de l'au moins un dispositif microfluidique (12), une fois que l'au moins un puits d'entrée (14) est rempli de l'au moins un échantillon liquide, au niveau d'une première station (50) de l'appareil de traitement (10) ;
le transfert, par au moins un dispositif de transfert (54) de l'appareil de traitement (10), de l'au moins un dispositif microfluidique (12) de l'au moins une première station (50) vers une seconde station (52) de l'appareil de traitement (10), dans lequel l'au moins un dispositif de transfert (54) relie au moins partiellement l'au moins une première station (50) et l'au moins une seconde station (52) ; et
la réalisation d'au moins une analyse de l'au moins un échantillon liquide au niveau de la seconde station (52) de l'appareil de traitement (10),
dans lequel l'au moins une seconde station (52) comporte au moins un dispositif de stockage (82) conçu pour stocker une pluralité de dispositifs microfluidiques (12), dans un état dans lequel l'échantillon liquide est au moins partiellement rempli dans le puits d'entrée (14) respectif et le puits d'entrée (14) respectif est au moins partiellement scellé.
